# EUROPEAN PATENT APPLICATION

(11) **EP 4 729 564 A1**
(43) Date of publication of application: **22.04.2026**
(21) Application number: 24207411.0
(22) Date of filing: 18.10.2024
(51) Int. Cl.: C08H 7/00, C08H 8/00, D21C 11/00, C07G 1/00

(54) **PROCESS FOR FRACTIONATING POLYMERIC MATERIAL**

(71) Applicant: Max-Planck-Gesellschaft zur Förderung der Wissenschaften e.V., 80539 München (DE)
(72) Inventor: PONNUDURAI, Arulselvan, 39106 Magdeburg (DE); SCHULZE, Peter, 39106 Magdeburg (DE); LORENZ, Heike, 39106 Magdeburg (DE); SEIDEL-MORGENSTERN, Andreas, 39106 Magdeburg (DE)
(74) Representative: Manitz Finsterwald Patent- und Rechtsanwaltspartnerschaft mbB

(57) **Abstract**

The present invention relates to process for fractionating polymeric material, comprising the steps of: providing a solution of polymeric material with a molecular weight distribution, having an average molecular weight, in a solvent or a solvent mixture, charging the solution into a filter unit of a fractionation system, wherein the filter unit comprises a filter bed, inducing a phase separation in the solution within the filter unit to form a dispersion, wherein the polymeric material is separated into a separated fraction and a non-separated fraction, wherein the polymeric material in the separated fraction differs from the polymeric material in the non-separated fraction with regard to the molecular weight distribution and/or the average molecular weight of the molecular weight distribution, and applying a force to the dispersion, causing it to pass through the filter bed from a first side to a second side, capturing the separated fraction, in particular a molecular weight fraction, in the filter bed.

## Description

The present invention relates to a process for fractionating polymeric material.

The limited availability of fossil resources has spurred increased interest in renewable resources within the industry. Lignocellulosic biorefineries are emerging as an option for producing various products from lignocellulosic biomass. Lignin, along with cellulose and hemicellulose, is a major component of woody biomass and holds potential for bio-based materials, possibly replacing traditionally produced polymers.

In light of fossil resource depletion and the growing need for sustainability, creating a circular economy has become essential. This approach requires the purification of plastic materials to ensure high-quality recycled products. By refining these materials, industries can reduce waste, conserve resources, and create a more sustainable production cycle, aligning with the goals of a circular economy.

Lignin, as found in lignocellulose, is a three-dimensional biopolymer derived from three monomers: p-coumaryl, coniferyl, and sinapyl alcohol, in proportions that vary depending on the plant source. Effective fractionation of biomass, necessary to separate lignocellulose constituents, can be achieved through processes like the organosolv (OS). For instance, an acetone-based OS process successfully isolates cellulose, hemicellulose, and lignin from lignocellulosic biomass. In this process the native structure of lignin is partially altered, producing fragments soluble in the OS solvent system. Lignin recovered through this process shows high yields and purity.

Despite established processing routes for cellulose and hemicellulose, lignin applications remain limited to lower-value uses. Unlike cellulose and hemicellulose, technical lignin is a heterogeneous biopolymer with varied molecular size and functionality, which often results in low solubility in (pure) solvents, such as water. This low solubility complicates its processing for high-value applications.

High-value applications, such as bio-based carbon fibers, demand lignin fractions with specific molecular weights and greater homogeneity in size and functionality. Prior art fractionation methods include membrane filtration, sequential solvent fractionation, and stepwise acidification. Sequential solvent precipitation fractionation typically involves changing solvents or adjusting binary solvent systems to manipulate lignin solubility. This can be achieved by dilution with an anti-solvent or evaporation, precipitating lignin with desired molecular weight characteristics.

Controlled anti-solvent addition (e.g., water dilution) can minimize incrustation in the equipment but often results in low filterability, which complicates continuous processing. Solvent recycling becomes necessary, and the increased volume from dilution requires significant energy for separation. While evaporation-based precipitation fractionation is more efficient, it is prone to incrustation and agglomeration due to lignin's softening properties.

Both methods can fractionate lignin into different molecular weight ranges with distinct functional groups. However, achieving continuous processing and scalability remains challenging. Separating the solid and liquid or (liquid and liquid) phases is difficult due to lignin's tendency to coalesce and soften under certain conditions, often resulting in discontinuous processing as the preferred method.

Accordingly, there is a need to provide a process for fractionating polymeric material, such as lignin or recycling material, which avoids the above problems, such as incrustation and scalability.

This problem is solved by the process according to claim 1. The dependent claims describe preferred embodiments of the present invention.

The present invention provides a process for fractionating polymeric material, such as lignin, that overcomes the challenges associated with conventional methods.

The process according to the present invention comprises the steps of:
Providing a solution of polymeric material with a molecular weight distribution having an average molecular weight in a solvent or solvent mixture.
Charging the solution into a filter unit of a fractionation system, wherein the filter unit comprises a filter bed.
Inducing a phase separation in the solution within the filter unit to form a dispersion, wherein the polymeric material is separated into a separated fraction, also called herein a polymer-rich phase, and a non-separated fraction, also called herein a polymer-lean phase, wherein the polymeric material in the separated fraction differs from the polymeric material in the non-separated fraction with regard to the molecular weight distribution and/or the average molecular weight of the molecular weight distribution.
Applying a force to the dispersion, causing it to pass through the filter bed from a first side to a second side, capturing the separated fraction, in particular a molecular weight fraction, in the filter bed.

The invention ensures efficient and continuous fractionation and purification of polymeric materials, such as lignin, leading to high-quality fractions suitable for higher value applications. It contributes to the development of a circular economy by improving the purification and recycling not only of bio-based materials, such as lignin, but also of conventional polymeric materials which need to be purified for recycling purposes, for example by removing polymer types which are unwanted or degraded material.

An average molecular weight of a molecular weight distribution may be any of a number average molecular weight (Mₙ) or weight average molecular weight (M_{w}). These average molecular weights may be determined by size exclusion chromatography. It is to be understood that always the same types of average molecular weights are to be compared with one another, i.e. Mₙ of the separated fraction with Mₙ of the non-separated fraction or M_{w} of the separated fraction with M_{w} of the non-separated fraction.

The molecular weight distribution of the polymeric material in the initially provided solution has a ratio of M_{w}/Mₙ of greater than 1.1, in particular greater than 2.0. In a preferred embodiment of the present invention the ratio of M_{w}/Mₙ of the polymeric material in the separated fraction is smaller than in the initial polymeric material in the solution.

In the process described in this invention, the fraction captured in the filter is a first portion of the starting polymeric material, while the remaining fraction in the solution constitutes a second portion of the starting polymeric material. The captured fraction and the fraction remaining in solution differ from one another. It was found that the process of the present invention is particularly suitable to fractionate a polymeric material into different molecular weight fractions. However, while fractionating based on the molecular weight is preferred, the present invention is not limited thereto. The process according to the invention can also be utilized to fractionate and separate starting heteropolymer materials into their different types of (homo-)polymers. The fractionating process relies on inducing a phase separation. This can be realized by changing the conditions, such that the initial polymeric solution crosses a phase boundary line. A phase boundary line represents the composition and condition in a phase diagram where the homogeneous solution of polymeric material and solvent converts into a two-phase system, i.e. a dispersion, resulting in the separation of the polymeric material into two distinct equilibrated phases, namely polymer-rich and polymer-lean, containing different molecular weight fractions of the once homogenous mixture. Phase separation can occur when specific conditions such as temperature, pressure, or solvent composition are altered, causing the solution to cross this boundary line. In the context of the present invention, inducing phase separation involves adjusting these conditions to move the initial polymeric solution across the phase boundary line. This can result in either a liquid-liquid separation, where a fraction of the polymeric material forms a distinct liquid phase, or a solid-liquid separation, where a fraction of the polymeric material forms a solid phase dispersed within the solution. By carefully controlling the temperature, pressure, or solvent composition, a fraction of the polymeric material separates from the solution, allowing for the effective fractionation of different molecular weight fractions or of different types of polymers. This precise control over phase conditions ensures efficient separation and recovery of high-quality polymer fractions suitable for various applications.

Herein, the terms "solution of polymeric material" and "polymeric solution" are used interchangeably herein and have the same meaning. These terms preferably refer to but are not limited to a homogeneous solution of the polymeric material.

The term "dispersion" refers to the material obtained from the "solution of polymeric material" after inducing the phase separation. In a dispersion, a mixture of at least two phases is present and can be either a liquid-liquid mixture or a liquid-solid mixture. It may also refer to a multi-phase system of a plurality of liquid and/or solid phases.

The separated fraction is also called herein a polymer-rich phase and is formed in the form of droplets or particles when inducing the phase transition. The remaining fraction, i.e. which is not included in the polymer-rich phase, is referred to as polymer-lean phase.

It was found that by inducing the phase separation in the filter unit and forcing the fluid phase to pass through the filter bed, incrustations can be avoided. Notably, it was also found that even in case of a liquid-liquid separation, one of the liquid phases, typically the denser one, is captured by the filter bed, when the mixture included in the filter unit is passed through the filter bed. Thereby making it possible to reduce maintenance of the fractionation system and allowing a highly productive and controlled phase separation process.

It is preferred that the polymeric material is a biopolymer, particularly lignin. Utilizing lignin, a renewable resource, aligns with sustainability goals and provides a valuable alternative to fossil-based materials. Further, fractionating lignin, in particular by molecular weight, provides for a high-quality lignin feedstock with a specified molecular weight and increased homogeneity in size and functionality. This makes it particularly useful for subsequent processing, such as the production of bio-based carbon fibers.

According to another preferred embodiment, the separated molecular weight fraction is filtered out of the dispersion formed from the solution when passing through the filter bed. This facilitates efficient isolation of the desired fraction, improving both the overall yield and quality of the product. Further, it was observed that incrustations can be significantly reduced by the in-situ filtration, thereby reducing the effort for maintenance of the fractionation system, leading to increased running times and productivity.

It is further preferred that the separated fraction is a specific fraction of the initial polymeric material, particularly a center cut fraction from the initial polymeric material with a specific molecular weight distribution. A center cut separation refers to a process of selectively isolating a specific fraction of polymeric material from a solution characterized by a narrower molecular weight distribution. In this method, the polymeric material with a broad molecular weight distribution is subjected to conditions that allow for the extraction of a middle or central portion of the starting distribution, referred to as the center cut. This center cut typically comprises polymer molecules with molecular weights that lie within a defined range, excluding the very high and very low molecular weight fractions. By implementing this approach, i.e. the center cut separation, one can obtain a more uniform polymer fraction with a prespecified molecular weight and desirable properties, enhancing its suitability for high-value applications and for applications requiring specific performance characteristics. Specifically, the separated molecular weight fraction may have a higher weight average molecular weight than the fraction remaining in the solution, ensuring the extraction of high-molecular-weight fractions suitable for specialized uses. Absolute average molecular weights, in particular weight and number average molecular weights, can be determined by size exclusion chromatography in combination with e.g. a multi angle light scattering (SEC-MALS) detector.

According to another embodiment, the solution includes a solvent mixture of more than one solvent, particularly two or more solvents, or the solution is a pulping liquor, for example, obtained from an organosolv process, kraft process (black liquor), or sulfite process. Pulping liquor, or black liquor, is a solution typically obtained in the pulping process, after the separation of cellulose from lignin and hemicellulose in lignocellulosic biomass. Pulping liquor contains dissolved lignin, dissolved hemicellulose (C5 sugar fractions) and other organic compounds, as well as various chemicals used in the pulping process. In the context of the present invention, pulping liquor serves as a solvent mixture in which the polymeric material is dissolved. The composition of the pulping liquor can be adjusted to facilitate the effective fractionation and separation of lignocellulosic biomass and polymeric materials, such as lignin, based on their molecular weight distribution.

It can be particularly advantageous if the solvent mixture comprises water and at least one organic solvent, having a boiling point lower than 80°C, particularly lower than 60°C, at ambient conditions. This choice of solvents ensures efficient phase separation and easy recovery of the solvents. Further, this choice of solvents can ensure high solubility towards the polymer start material and easy recovery of the solvents.

In a preferred embodiment, the solvent mixture comprises a ratio of water to organic solvents from 5:95 to 50:50, particularly from 10:90 to 40:60, and specifically from 15:85 to 30:70. This ratio optimizes the separation process by balancing solubility and phase separation efficiency.

It is further preferred that the solvent mixture is water and acetone or water and ethanol, specifically water and acetone. These solvent combinations are effective in dissolving lignin and facilitating its separation and fractionation.

According to another preferred embodiment, the phase separation is induced by generating supersaturation. This can be achieved by applying reduced pressure to evaporate a portion of the solvent or solvent mixture, adding an anti-solvent, by cooling the solution, or by applying a combination of these.

It is advantageous if the vapor resulting from the evaporation is captured either by direct condensation or after rectification. This ensures efficient recovery of solvents, reducing waste and improving process sustainability.

In a preferred embodiment, the temperature of the solution and/or of the dispersion formed from the solution is kept essentially constant. Herein, keeping an essentially constant temperature means that the temperature in the filter unit does fluctuate not more than ±10°C, preferably not more than ±2°C, even more preferably ±1°C, around a predetermined set point. This controlled temperature stability is advantageous for ensuring consistent phase separation and optimal fractionation of the polymeric material. By keeping the temperature within this narrow range, the process avoids significant thermal variations that could affect the solubility and separation efficiency of the polymeric material. This temperature control enhances the reliability and reproducibility of the fractionation process, leading to higher-quality polymer fractions suitable for various high-value applications. In view of this, it is specifically preferred that the filter unit is temperature controlled.

According to another preferred embodiment, the pressure in the filter unit is set in the range of 1 to 1000 mbar, 100 mbar to 800 mbar, particularly between 150 mbar to 500 mbar, and especially between 175 mbar to 400 mbar. Optimizing the pressure range enhances the efficiency of phase separation and fractionation. The pressure may be measured by using a pressure sensor at a suitable location within the filter unit.

It is preferred that the process temperature is in the range of 1°C to 95°C, in particular of 10°C to 45°C, especially of 10°C to 30°C. This temperature range ensures effective separation without degrading the polymeric material. The temperature may be measured by using a temperature sensor at a suitable location within the filter unit. Even more preferably, the process temperature is kept essentially constant at a temperature which is within the ranges mentioned above.

It is further preferred that the applied force is a forced circulation (fc), generated for example by a centrifugal force or stirring. Forced circulation ensures uniform flow through the filter bed, enhancing separation efficiency. In particular, applying a centrifugal force to drive the solution and the dispersion formed from the solution of polymeric material, respectively, through the filter bed is preferable.

According to another embodiment, charging the fractionation system, specifically the filter unit thereof, is continued even after inducing the phase separation. In other words, a continuous charging of the filter unit with the polymeric solution is applied. This continuous charging facilitates uninterrupted processing, improving efficiency and throughput. Continuous charging refers to the process of continuously adding the polymeric solution into the filter system, specifically into the filter unit thereof, even after the phase separation has been induced. This approach ensures that the system operates without interruption, maintaining a steady flow of material through the filter unit. Continuous charging is advantageous as it maximizes the efficiency and throughput of the separation process, allowing for consistent production of high-quality polymer fractions. In particular in combination with the absence of significant incrustations, the continuous charging allows for a high productivity, improving also the scalability of the whole process, allowing the realization of a fed-batch process.

In accordance with a particularly preferred embodiment, in the process according to the present invention the step of charging the polymeric solution into a filter unit is an initial charging of the filter unit, followed by the step of inducing a phase separation, which in turn is followed by a step of continuous charging of additional polymeric solution into the filter unit. The step of forcing the dispersion formed from the solution to pass through the filter bed is preferably carried out simultaneously, at least to the steps of inducing a phase separation and charging additional solution of polymeric material into the filter unit. By applying the process steps this way, the filter unit and fractionation is operated in a fed-batch mode, allowing for a more continuous processing of a polymeric solution feed.

In another preferred embodiment, the process further comprises circulating the solution and the dispersion formed from the solution of polymeric material, respectively, from the second side of the filter bed to the first side of the filter bed. This recirculation improves the completeness of the separation and maximizes yield. Even more preferably, the recirculation is carried out continuously while passing the solution and the dispersion formed from the solution, respectively, through the filter bed.

In another preferred embodiment, in the process according to the present invention the fractionation system further comprises a filter device associated with a product pump to continuously remove the polymer-lean phase in order to keep the liquid level in the filter unit constant. This step allows continuously charging of the filter unit with the polymeric solution and continuous draining of the polymer-lean phase. The filter device, including a suitable filter material, serves as a trapping agent for residual polymer-rich phase which is not caught in the filter bed of the filter unit e.g. during the fed-batch and continuous mode. Providing the filter device and thereby removing residual polymer-rich phase can avoid the formation of incrustations downstream of the product pump and contamination of the polymer-lean phase with the polymer-rich phase, e.g. for a consecutive fractionation step. This continuous processing in a fractionation system having a filter unit and a filter device improves and maximizes yield. Even more preferably, this is carried out simultaneously while passing the solution and the formed dispersion, respectively, through the filter bed(s). Continuous charging and discharging refers to the process of continuously adding the polymeric solution into the fractionation system, specifically into the filter unit thereof, and continuously discharging of the polymer-lean phase, which may be a dispersion including also residual polymer-rich phase, even after the phase separation has been induced and passing said polymer-lean phase removed from the filter unit through a filter device in order to remove residual polymer-rich phase and thereby avoiding the formation of incrustations and contamination of the polymer-lean phase with polymer-rich phase, ensuring a high separation quality/sharpness. This approach ensures that the system operates without interruption, maintaining a steady flow of material through the filter unit, improving efficiency and throughput.

According to another preferred embodiment, the process further comprises a washing step, including to stop the charge of the filter unit with the additional polymeric solution, removing the remaining liquid from the filter unit, charging the filter unit with a washing solvent or with a washing solvent mixture, and to pass the washing solvent or washing solvent solution through the filter bed, in particular by reapplying said force, in order to wash the filter bed and extract the captured polymer fraction from the filter bed, and removing the captured fraction, in particular molecular weight fraction, from the filter unit. This washing step ensures high purity of the separated fraction and regenerates the filter beds, which is increasingly exploited over processing time. In case the fractionation system comprises more than one filter unit and optionally filter devices, the washing step may be applied to each these filter units and to the filter devices with its each filter beds, if present. In order to provide a continuous processing of the polymer solution, it is particularly preferred that the washing step is applied to the more than one filter units such that always at least one filter unit does not undergo the washing step and is in a state of operation where it can receive polymeric solution. Further, the washing step may be improved by applying an increased temperature, which may result in a decreased time required for the washing step and/or in a reduced amount of solvent necessary to carry out the washing step.

It is advantageous if the washing step further comprises circulating the washing solvent or washing solvent mixture from the second side of the filter bed to the first side. This ensures thorough washing and extraction of the separated fraction.

It is further preferred that the fractionation system comprises at least a first filter unit and a second filter unit, operated either simultaneously or sequentially. It is even more preferred to operate all of the at least first and second filter units in a fed-batch or in a continuous mode, as described above. Each filter unit may be associated with a filter device or with several filter devices or several filter units may be associated with a single filter device, the filter device(s) receive polymer lean phase with residual polymer-rich phase particles or droplets from the filter units and separate therefrom this residual polymer-rich phase in the polymer-lean phase removed from the filter units. Even when a single filter unit is operated in a mode of continuous processing, it is necessary to interrupt the feed of the polymeric solution into the filter unit to extract the polymer fraction captured in the filter bed(s), particularly by initial discharging the polymer-lean phase and washing the filter bed of the filter unit and optionally of the filter device as set out above. Utilizing a fractionation system with at least a first filter unit and a second filter unit allows for a truly continuous processing of the polymeric solution feed, especially when these filter units are operated in parallel mode. In this configuration, one of the at least two filter units is charged with the polymeric solution and undergoes the fractionation while the other filter unit undergoes discharging and washing of the filter beds. In other words, the first and second filter units are operated in a time-shifted manner, enabling continuous processing of the polymeric solution feed by the fractionation system and periodic withdrawal of the polymer-rich fractions. This approach enhances process efficiency and reduces deadtime. It is to be understood that the first and second filter unit can be part of the same fractionation system or of separate fractionation systems. When being part of the same fractionation system, they are connected to additional components of that fractionation system, such as for example one or more pipe(s), one or more valve(s), one or more pump(s), one or more storage tank(s), one or more evaporation unit(s), one or more condenser(s), and/or one or more filter device(s).

Depending on the time required for the discharging and washing step, it can be even more advantageous to use additional filter units in parallel, such as three or more, or four or more units. Particularly when the washing step takes a considerable amount of time, utilizing a greater number of filter units ensures continuous and consistent processing of the polymeric solution feed. It is also advantageous if parallel filter units are operated sequentially and in particular with a time-shift, allowing continuous feed and continuous withdrawal of polymer-rich and polymer-lean fractions. For this, the specific time required for filling the filter unit and conducting the fractionation and the specific time for discharging the polymer-lean fraction and washing the filter beds is preferably predetermined.

Though the present invention is not limited to using a specific material for the filter bed, in accordance with another preferred embodiment, the filter bed is made of glass wool, steel wool, porous resins, such as porous melamine resins, activated carbon, or fibrillated materials such as fibrillated cellulose or other suitable materials. These materials can be advantageous regarding effective filtration and durability.

According to another preferred embodiment, the remaining solution (polymer-lean fraction) discharged from the filter unit is again charged into a filter unit for another fractionation process. This sequential and consecutive use of a filter unit and fractionation steps allows to perform a center cut fractionation and generally maximizes yield and efficiency. The subsequent processing of the remaining solution discharged from the filter unit can be done in the filter unit used for the first separation step, provided that the filter unit is prepared e.g. by washing before being charged with the remaining solution, or in a further filter unit. When the intention is to have a continuous processing of incoming feed of a polymeric solution, it is more preferable to use a further filter unit for the subsequent phase separation. In case it is desired to keep the process equipment to a minimum, the filter unit used for the first phase separation step can be used for a further phase separation step after intermittent washing was performed. The process according to this embodiment is preferably adjusted by the number of separation steps, the temperature, the pressure and the solvent composition in each step to obtain specific and defined polymer fractions, in particular lignin fractions, with certain molecular weights and molecular weight distributions (large to small).

The accompanying drawings illustrate embodiments of the present invention and, together with the description, serve to explain the principles of the invention. The present invention is not limited to these drawings.

In the drawings the following is shown:
Fig. 1 a schematic drawing of a basic fractionation system suitable for carrying out the process according to the present invention.
Fig. 2 a schematic drawing of a filter unit.
Fig. 3 a photograph of an open filter unit, with the filter bed visible.
Fig. 4 recordings of particle counts (black line: 0 - 50 microns) by Focused Beam Reflectance Measurement (FBRM) and acetone concentration (dotted black line) by Fourier-Transform Infrared Spectroscopy (FT-IR) probes.

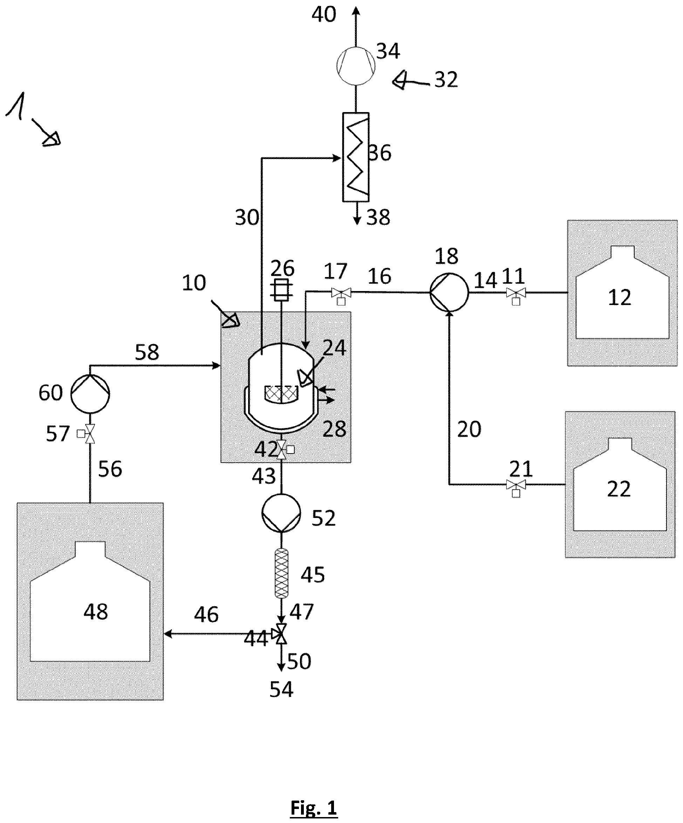

A central part of the fractioning system 1 shown in Fig. 1 is a filter unit 10. A feed tank 12 is connected via pipes 14 and 16 to the filter unit 10. A pump 18, arranged between pipes 14 and 16 can pump a liquid, such as a polymeric solution, from the feed tank 12 into the filter unit 10. A valve 11 can open and close the stream from the feed tank 12. A further pipe 20 connects a washing tank 22 via pump 18 and pipe 16 with the filter unit 10. A valve 21 can open and close the stream from the washing tank. Another valve 17 can stop any flow coming from pipe 16 into the filter unit.

The filter unit 10 is equipped with a rotatable filter bed 24. The filter bed 24 can be rotated by a motor 26, to generate a centrifugal force within the filter unit 10, thereby generating a forced flow of a polymeric solution (not shown) and a dispersion (not shown) formed from said polymeric solution through the filter bed 24. The filter unit 10 is equipped with a heating mantle 28, which can be used to maintain the temperature of the solution and the dispersion, respectively, in the filter unit 10 essentially constant. The heating mantle 28 can compensate for a loss of heat energy, resulting from evaporation of solvent which is one way to induce a phase separation within the fractioning system 1. Instead of the heating mantle 28, which is shown in Fig. 1, also other means for controlling the temperature of the solution and the dispersion, respectively, in the filter unit 10, such as an external cycle through a reboiler, e.g. shell-tube or plate heat exchanger, could be used.

The inside of the filter unit 10 is connected via a pipe 30 to an evaporation unit 32. The evaporation unit 32 has a vacuum pump 34 and a condenser 36 which are in fluid communication with the inside of filter unit 10 via pipe 30. The vacuum pump 34 is capable of reducing the pressure within the filter unit 10, causing an evaporation of solvent(s), such that the solvent composition of the polymeric solution changes. Evaporated solvent flows through pipe 30 into condenser 36, where it condenses and is collected at a solvent recovery outlet 38 of the condenser 36. Uncondensed solvent and/or atmosphere which is pumped out of the inside of filter unit 10 is released via exhaust 40.

Further, at the bottom of filter unit 10 a valve 42 is provided for draining contents (not shown) from the inside of filter unit 10. The pipe 43 is connected to a pump 52 and for continuous operation with a filter device 45 (e.g. in form of a filter column, filled with the same filter material as found in the first filter unit). The stream 47 is connected via a valve 44 and pipe 46 to a storage tank 48. Further, the valve 44 is also connected via a pipe 50 to a product outlet 54. For batch and fed-batch mode, the filter device 45 is not necessarily needed. For a continuous operation, the filter device is particularly useful, to remove residual polymer-rich phase and thereby avoiding incrustations being formed e.g. in the storage tank 48 or contamination of the polymer-lean phase in case it is fed into a consecutive fractionation step.

The storage tank 48 is further connected via pipes 56 and 58 to the filter unit 10, so that it is possible to transfer a possible fractionated polymeric solution that has been drained via drain 43 and pipe 46 into the storage tank 48 back into the first filter unit 10 by using pump 60. Between pipe 56 and pump 60, another valve is placed. The transferred back fractionated polymeric solution can than undergo a further fractionation process, thereby obtaining a center cut fraction.

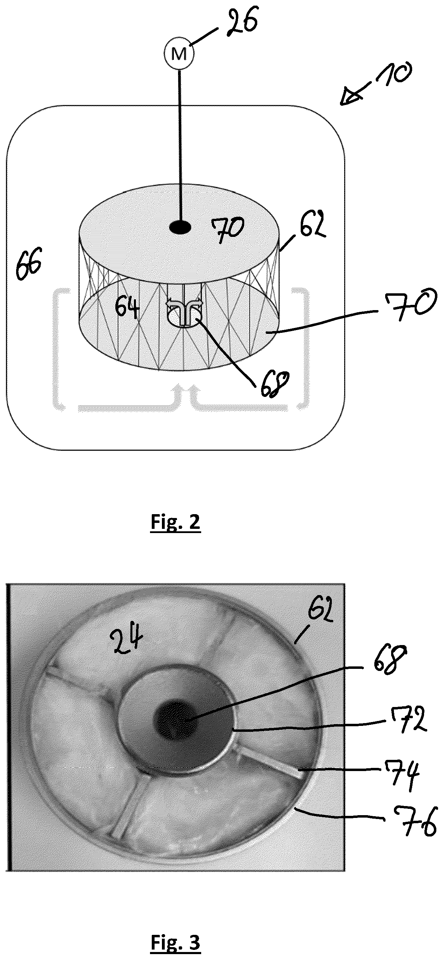

Fig. 2 illustrates a simplified sketch of the filter unit 10 of the fractionation system 1 of Fig. 1. In the sketch of Fig. 2 a cage 62 is shown, which serves as holder for the filter bed 24, which is not shown in Fig. 2. The inside of the cage 62 can be considered a first side 64 of the filter bed 24 and outside of the cage 62 a second side 66 of the filter bed 24. The cage 62 is connected to a motor 26 which can rotate the cage 62. Thereby a liquid, in particular a polymeric solution and a dispersion obtained therefrom, within the cage 62, i.e. at the first side 64 of the filter bed 24, experiences a force causing a centrifugal flow form the first side 64, through the filter bed 24 to the second side 66, thereby leaving the cage 62. The filter unit 10 is configured such that the liquid which has left the cage 62 can be transferred back to the first side 64 within the cage 62 through a through-hole 68, which is provided in a cover plate 70 at the bottom of cage 62. The arrows drawn in the sketch of Fig. 2 illustrate the flow of the liquid. The schematic drawing of Fig. 2 shows the cage as a relatively wide meshed cage. Depending on the material of the filter bed and in particular on the rotational speed provided by motor 26 it can be preferred to use a fine mashed cage, which secures the filter material even though a strong centrifugal force is applied.

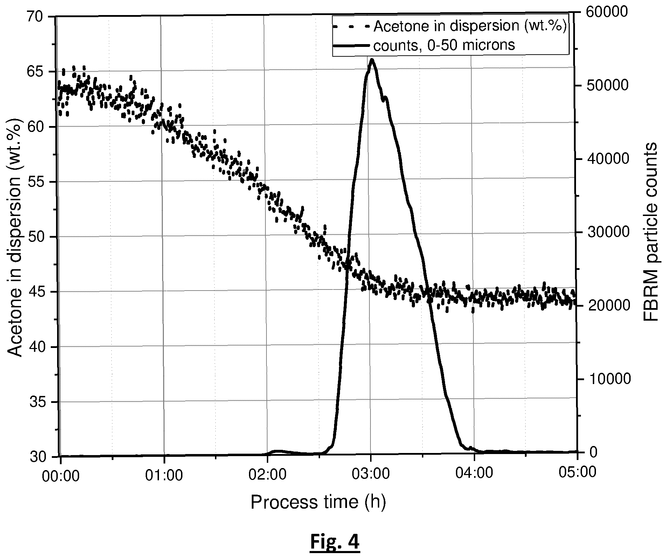

In Fig. 3 a photograph of a cage 62 is shown from which cover plates 70 have been removed, so that the filter bed 24 can be seen. The filter bed 24 shown in Fig. 3 is glass wool, which is arranged within the cage 62, which has an outer circumferential structure 76 that is connected via four spokes 74 to a central hub 72 at the center of which a through hole 68 is provided at the bottom part of cage 62. At the top part of cage 62, the central hub is equally provided with a hole, to which an axis is mountable to connect the cage 62 to a motor 26 (not shown in Fig. 3). Fig. 4 shows particle recordings (line) and acetone concentration in the dispersion (dots) during the evaporative fractionation experiment of a batch experiment.

Examples of a batch and fed-batch experiments are described in the following, which illustrate the present invention. The present invention is not limited to these experiments and Examples.

The examples were realized by using a fractionation system in accordance with Fig. 1, which was equipped with a filter unit. In the examples a double jacket rotating bed reactor with a maximal volume range of 350 mL (Vessel V2, SpinChem^{®}) was used as filter unit. The solid bed of the rotating bed reactor was filled with conventional glass wool, which serves as the filter bed material, prior the experiment. The feed lignin, in form of a polymeric solution, was introduced into the reactor by opening the valves 11 and 17 and having the valves 21 and 42 closed. The feed solution was pumped by the pump 18 through pipes 14 and 16. Once the feed was transferred into the filter unit 10, valves 11 and 17 were closed. The evaporative fractionation was started, once reducing the pressure via a vacuum pump 34 (PC 3000, vacuubrand). Temperature of the polymeric solution and of the dispersion resulting from it, was monitored and kept constant through a heating mantle 28 (Proline RP845, Lauda) and kept constant at 25 °C. The evaporation of the solvent mixture was solely driven by the pressure reduction. A cooling thermostat (Proline RP845, Lauda) was used to cool the vapor phase, and the mass of the distillate was continuously monitored and recorded by a balance (G21002, Oxford). The vapor temperature was also monitored throughout the complete process. The stirrer 26 was set at a rotation rate of 1000 rpm. In addition to inline process probes, two additional temperature probes were inserted to track the temperature in the dispersion and in the vapor phase above the distillation column.

**Table 1 displays the operating conditions, system parameter and characteristics of the feed lignin used for the examples.**

| **Example** | **Batch** | **FB-1** | **FB-2** |
|---|---|---|---|
| **Concentration of acetone in acetone/water feed [wt. %]** | 62 | 63 | 63 |
| **Weight average molecular weight of feed Mw [kg mol⁻¹]** | 13.35 | 14 | 13.9 |
| **Concentration of acetone in polymer-lean phase [wt.%]** | 44.32 | 44.29 | 43.44 |
| **End pressure [mbar]** | 220 | 220 | 220 |

### Batch Example:

8.2 g of an OS beech wood lignin was mixed with 257 g of 60/40 by weight mixture of acetone and water. The feed solution was introduced into the filter unit by opening valve 11 and valve 17 and pumping the solution by pump 18. Afterwards the valves were closed and the fractionation system sealed air-tight. The first approximately 15 minutes are a start-up phase of the example, in which the pressure inside the filter unit 10 charged with the polymeric solution, i.e. the beech wood organosolv lignin solution in an acetone/water mixture (60/40, w/w), is reduced to below 250 mbar. Thereby acetone evaporated from the polymeric solution and a phase separation in the solution within the filter unit 10 is induced to separate a specific molecular weight fraction of the lignin from the initial polymeric solution, by forming a dispersion. The cage holding the filter bed material made of glass wool was rotated to drive the dispersion from a first side of the filter bed to a second side thereof and thereby capturing the separated molecular weight fraction in the filter bed.

The phase separation was also monitored by FBRM recording, as shown in Fig. 4. After around 2 hours, the acetone content dropped below 52.5 wt.%, particles began to form within the polymeric solution, i.e. a dispersion is formed. The particles may be liquid or solid particles. At a process time of three hours, the acetone concentration has dropped to around 45 wt.% and a peak in the particle counts, as observed by FBRM, appeared. The acetone concentration remained at around 45 wt.%, which corresponds to the vapor-liquid equilibrium of acetone-water towards 220 mbar. The observed FBRM counts showed a decline after the acetone concentration reached a stable level, which is due to the particles being captured within the filter bed. The pressure was set again to ambient conditions by the means of a vacuum pump 34. The remaining solution, which is called herein the polymer-lean fraction, was drained from the filter unit by opening the valve 42 and pumping the solution by the pump 52 through the pipe 43. In the case of batch and fed-batch, a filter device 45 is not necessarily needed as displayed in Fig.1. The polymer-lean fraction is then further pumped through the pipe 47 and can be stored in storage tank 48 for a further fractionation step or passed through the valve 44 to the product outlet stream 54. The filter bed 24 was then further rotated to remove remaining polymer-lean fraction from the filter bed 24, by kind of "spin-out" the filter bed 24. For this purpose, the valve 42 was closed again. Thereafter, the filter unit 10, was washed with a washing solution of 80 wt.% acetone in water to dissolve any lignin which was left in the filter unit 10, but was not captured in the filter bed 24. Therefore, valve 11 was closed and valves 21 and 17 were opened to pump the washing solution. This washing provided a so-called polymer-reactor fraction. This fraction was harvested and pumped towards the outlet stream 54. Next, the so-called polymer-rich fraction was extracted from the filter bed 24 by charging the filter unit 10 again with fresh washing solution of 80 wt.% acetone in water and rotating the filter bed 24 again with 1000 rpm for 15 minutes, while continuously transferring the liquid within the filter unit 10 from the second side 66 of the filter bed 24 back to the first side 64. After 15 minutes, the polymer-rich fraction was drained from the filter unit 10 and pumped to the outlet stream 54.

The dissolved lignin fractions polymer-lean, polymer-rich and polymer-reactor were dried. Upon drying, the polymer-lean fraction was found to have 7.14 g, whereas the polymer-rich phase was found to have 0.91 and the polymer-reactor fraction of 0.12g, yielding an overall lignin recovery above 99 %. The SEC-MALS analysis revealed weight-average molecular weights of 13 350 g mol⁻¹ for the feed, 32 650 g mol⁻¹ for the polymer-rich and 12 400 g mol⁻¹ for the polymer-lean lignin fraction indicating the successfully molecular weight fractionation of the starting lignin material, specifically extracting the desired high molecular weight fraction.

### Fed-Batch Example 1 (FB-1):

In this example, 10.7 g of an OS beech wood lignin was mixed with a total amount of 349 g of 60/40 by weight mixture of acetone and water and processed. Fed-batch example 1 was carried out identically to the batch example. However, in contrast to the batch example, at a process time of around 3.5 hours additional polymeric solution was fed into the filter unit with feed rates between 0.45 and 1.75 g min⁻¹. For this purpose, the pump 18 was switched on and valves 11 and 17 were opened. In contrast to the batch example the particle count remained on a higher level, which is the result of the constant precipitation of continuously fed polymeric solution inside the filter unit 10. Once the maximum volume of the filter unit 10 was reached, the experiment was stopped and the fractions were obtained from the fractionation system and analyzed as described above for the Batch Example.

The dissolved lignin fractions polymer-lean, polymer-rich and polymer-reactor were dried. Upon drying, the polymer-lean fraction was found to have 9.24 g, whereas the polymer-rich phase was found to have 1.16 and the polymer-reactor fraction of 0.09g, yielding an overall recovery above 98 %. The SEC-MALS analysis revealed weight-average molecular weights of 14 000 g mol⁻¹ for the feed, 34 150 g mol⁻¹ for the polymer-rich and 12 900 g mol⁻¹ for the polymer-lean lignin fraction indicating the successful molecular weight fractionation of the starting lignin material comparable to the batch example. The mass balances are further fulfilled as in the batch experiment, indicating the suitability of this process for fractionating polymeric material without typical incrustations and softening behavior, in particular found in evaporation-based processes.

### Fed-Batch Example 2 (FB-2):

Fed-batch example 2 was carried out identically to FB-1, however, with adjusted feed rates between 0.22 and 1.75 g min⁻¹. In this example, 10.6 g of an OS beech wood lignin was mixed with a total amount of 346 g of 60/40 by weight mixture of acetone and water and processed.

Upon drying, the polymer-lean fraction was found to have 9.19 g, whereas the polymer-rich phase was found to have 1.24 and the polymer-reactor fraction of 0.09g, yielding an overall recovery above 99 %. The SEC-MALS analysis revealed weight-average molecular weights of 13 900 g mol⁻¹ for the feed, 32 500 g mol⁻¹ for the polymer-rich and 12 850 g mol⁻¹ for the polymer-lean lignin fraction indicating the successful molecular weight fractionation of the starting lignin material and also the reproducibility and comparability towards the before mentioned examples.

The process as displayed in Fig.1 can be implemented also in a continuous mode. Therefore, after switching on the feed pump 18 for the fed-batch process, the product pump 52 is switched on as well. The valve 42 is opened and a product pump rate (remaining flowrate after subtracting the evaporation rate from the feed rate) is set, so that the filling level in the filter unit 10 is constant. The precipitate of the polymer-rich phase which is not caught within the first bed 24, can be caught by the additional filter device 45. The filter device 45 can be for example a glass column filled with the same filter material as found in the filter bed 24. The polymer-lean phase can be constantly pumped and either stored in storage tank 48 for a consecutive second fractionation step (center cut) or streamed out as a product stream by pipe 54. By time, the filter beds 24 and 45 will be accumulated with the polymer-rich fraction and the feed pump 18 needs to be stopped. The remaining solution is drained similar as described above and the filter beds washed by introducing the washing solution 22. To allow for a continuous feeding and periodical withdrawal of the polymer-rich fraction, the presented basic fractionation system as shown in Fig.1 can be modified by adding a further (second) filter unit, which is not shown in the drawings. As the continuous fractionation in the first filter unit is finished (due to filled filter bed 24) and the washing step is carried out, the feed supply is switched to the second filter unit. During the time needed for carrying out the separation process in the second filter unit, the polymer-lean phase is discharged from the first filter unit and either pumped out as a product outlet or stored for being used for a second fractionation step. After discharging, the filter bed 24 of the filter unit 10 and the filter bed of the optional filter device 45 are regenerated by carrying out the washing step as described above. Once the polymer-rich phase is extracted from the filter beds and discharged from the first filter unit, the feed supply can switch towards the first filter unit. In such way, the feed is continuously fed into the fractionation system and the polymer-rich fraction stream periodically harvested.

For a fully continuous mode, where feed is introduced permanently and the products are continuously harvested, the times for each sub-step (filling and fractionation, discharging and washing) should be known and respected. If the (time) adjustment between the two steps are aligned, e.g. by the means of utilizing several filter units in parallel, a continuous withdrawal of the polymer-rich fraction is achievable.

Within the batch and fed-batch examples, the higher molecular weight fraction sample is fractionated and precipitated from the starting material. With the understanding and knowledge of the phase behaviors of polymeric materials in a solvent, solvent mixtures or pulping liquors, selectively and targeted molecular weight fractions can be harvested. While the examples are based on evaporation, also the addition of anti-solvent or a change of temperature and/or pressure appear to be suitable for inducing a phase separation. The process according to the invention is in principle applicable to practically all soluble (bio-) polymer samples.

## Claims

1. Process for fractionating polymeric material, comprising the steps of:
providing a solution of polymeric material with a molecular weight distribution, having an average molecular weight, in a solvent or a solvent mixture, charging the solution into a filter unit of a fractionation system, wherein the filter unit comprises a filter bed,
inducing a phase separation in the solution within the filter unit to form a dispersion, wherein the polymeric material is separated into a separated fraction and a non-separated fraction, wherein the polymeric material in the separated fraction differs from the polymeric material in the non-separated fraction with regard to the molecular weight distribution and/or the average molecular weight of the molecular weight distribution, and
applying a force to the dispersion, causing it to pass through the filter bed from a first side to a second side, capturing the separated fraction, in particular a molecular weight fraction, in the filter bed.

2. Process according to claim 1, wherein the polymeric material is a biopolymer, particularly lignin.

3. Process according to claim 1 or 2, wherein the separated molecular weight fraction is a specific fraction of the polymeric material, in particular a center cut fraction is made from the polymeric material, and/or
wherein the separated molecular weight fraction has a higher weight average molecular weight than the non-separated fraction remaining in solution.

4. Process according to any of the preceding claims, wherein the solution includes a mixture of more than one solvent, in particular two or more, or wherein the solution is a pulping liquor, for example obtained from an organosolv process.

5. Process according to any of the preceding claims, wherein the phase separation is induced by generating a supersaturation, e.g. by applying a reduced pressure to evaporate a portion of the solvent or of the solvent mixture, or by adding an anti-solvent, or by cooling the solution, or by applying a combination of these, and wherein preferably vapor resulting from the evaporation is captured either by direct condensation or after rectification.

6. Process according to claim 5, wherein the temperature of the solution is kept essentially constant.

7. Process for fractionating polymeric material according to any of the preceding claims, wherein the pressure in the filter unit is set in the range of, 1 to 1000 mbar, 100 mbar to 800 mbar, particularly to 150 mbar to 500 mbar, and especially to 175 mbar to 400 mbar, and/or
wherein the process temperature is in the range of 1°C to 95°C, in particular of 10°C to 45°C, especially of 10°C to 30°C.

8. Process for fractionating polymeric material according to any of the preceding claims, wherein charging the fractionation system is continued even after inducing the phase separation.

9. Process for fractionating polymeric material according to any of the preceding claims, wherein charging and discharging of the filter unit is continued even after inducing the phase separation, and wherein the fractionation system is further provided with a filter device and optionally with a product pump, and
wherein the discharged solution can be additionally filtered by the filter device.

10. Process for fractionating polymeric material according to any of the preceding claims, wherein the applied force is a forced circulation, generated for example by a centrifugal force or stirring.

11. Process for fractionating polymeric material according to any of the preceding claims, further comprising circulating the dispersion obtained from the solution of polymeric material from the second side of the filter bed to the first side of the filter bed.

12. Process for fractionating polymeric material according to any of the preceding claims, further comprising:
stopping the charge of the filter unit with the solution of polymeric material, removing the remaining solution within the filter unit from the filter unit,
charging the filter unit with a washing solvent or a washing solvent mixture and reapplying the force to wash the filter bed and extract the captured fraction from the filter bed, and
removing the extracted fraction from the filter unit.

13. Process for fractionating polymeric material according to claim 15,
further comprising circulating the washing solvent or washing solvent mixture from the second side of the filter bed to the first side.

14. Process for fractionating polymeric material according to any of the preceding claims, wherein the remaining solution discharged from the filter unit is charged into at least a second filter unit for another fractionation process, e.g. to perform a center cut separation.

15. Process for fractionating polymeric material according to any of the preceding claims, wherein the fractionation system at least comprises a first filter unit and a second filter unit, which are operated sequentially in a time-shifted manner to allow for continuous feeding of polymeric solution and periodic withdrawal of the polymer rich fractions.

16. Process for fractionating polymeric material according to any of the preceding claims, wherein the process is carried out as a full continuous process allowing for continuous feeding of polymeric solution and continuous withdrawal of a separated polymer-rich fraction and a non-separated polymer-lean fraction, by adjusting the times for charging the filter unit(s), for inducing a phase separation, for capturing the separated fraction in the filter bed, for discharging and washing of the filter bed(s), and wherein at least two filter units are operated in parallel mode.
